# EUROPEAN PATENT SPECIFICATION

(11) **EP 3 689 061 B1**
(45) Date of publication and mention of the grant of the patent: **16.08.2023**
(21) Application number: 17927436.0
(22) Date of filing: 28.09.2017
(51) Int. Cl.: H04W 76/14, H04W 76/15, H04W 72/20

(54) **METHODS FOR PERFORMING DUAL CONNECTIVITY IN SIDELINK COMMUNICATIONS, COMMUNICATION NODE AND COMPUTER-READABLE MEDIUM**
VERFAHREN ZUR DURCHFÜHRUNG VON DUALER KONNEKTIVITÄT IN EINER SIDELINK-KOMMUNIKATION, KOMMUNIKATIONSKNOTEN UND COMPUTERLESBARES MEDIUM
PROCÉDÉS PERMETTANT D'EXÉCUTER DES COMMUNICATIONS DE LIAISON LATÉRALE À DOUBLE CONNECTIVITÉ, NOEUD DE COMMUNICATION ET SUPPORT LISIBLE PAR ORDINATEUR

(43) Date of publication of application: 05.08.2020
(73) Proprietor: ZTE Corporation, Shenzhen, Guangdong 518057 (CN)
(72) Inventor: WANG, Mengzhen, Shenzhen Guangdong 518057 (CN); CHEN, Lin, Shenzhen Guangdong 518057 (CN); HUANG, Ying, Shenzhen Guangdong 518057 (CN)
(74) Representative: Vossius & Partner Patentanwälte Rechtsanwälte mbB
(86) International application number: PCT/CN2017/104056
(87) International publication number: WO 2019/061180

(56) References cited:
- CN-A- 106 470 384
- CN-A- 106 664 700
- CN-A- 107 040 864
- ZTE: "Discussion on PC5 carrier aggregation", 3GPP DRAFT; R2-1708509 DISCUSSION ON PC5 CARRIER AGGREGATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051318364, Retrieved from the Internet: URL:http://www.3gpp.org/ftp/Meetings_3GPP_ SYNC/RAN2/Docs/ [retrieved on 2017-08-20]
- HUAWEI ET AL: "Discussion on carrier aggregation for R15 sidelink", 3GPP DRAFT; R1-1707034, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou, China; 20170515 - 20170519 14 May 2017 (2017-05-14), XP051272264, Retrieved from the Internet: URL:http://www.3gpp.org/ftp/Meetings_3GPP_ SYNC/RAN1/Docs/ [retrieved on 2017-05-14]
- CATT: "Resource pool allocation for D2D communication", 3GPP TSG RAN WGI Meeting #77 R1-142005, 23 May 2014 (2014-05-23), XP050787602,

## Description

### TECHNICAL FIELD

The disclosure relates generally to wireless communications and, more particularly, to methods for performing dual connectivity in wireless sidelink communications, a communication node and a computer-readable medium.

### BACKGROUND

Proximity-based communication technologies such as D2D (Device-to-Device) and V2X (Vehicle-to-Everything) are attracting more and more attention and research. It can be applied to public safety, car networking, field command, social networking, electronic payment, local advertising, game entertainment, network coverage enhancement, etc. A D2D system may be applied in scenarios with network coverage, with partial network coverage, or without network coverage, allowing direct discovery or direct communication between multiple user equipment (UEs) supporting D2D. A direct communication between two UEs is typically referred to as a sidelink (SL) communication, where the two UEs may be in a D2D or V2X system. D2D technology can reduce burden on a cellular network, reduce battery power consumption of the UE, improve data rate, improve robustness of the network infrastructure, meet requirements of high data rate services and proximity services, and support direct communication without network coverage, to meet requirements of public security and other special communication needs.

Car network communication can realize real-time information exchanges between car and car, between car and roadside infrastructure, between car and pedestrian, by informing each other's current state (including the vehicle's location, speed, acceleration, driving path, etc.), obtaining road environment information, collaborative awareness of road hazards, and providing a variety of collision warning information in a timely manner to prevent road traffic accidents. Car network communication can be divided into several modes: Vehicle-to-Vehicle (V2V) communications, Vehicle-to-Pedestrian (V2P) communications, Vehicle-to-Infrastructure (V2I) communications, Vehicle-to-Network (V2N) communications, where the above-mentioned car network communication modes can be collectively referred to as Vehicle-to-Everything (V2X) communications. In the V2X communication study based on LTE (Long Term Evolution) organized by 3GPP (3rd Generation Partnership Project), V2X communication based on sidelink between UEs is one way to realize the V2X standard. That is, business data is not forwarded through the base station (BS) and the core network, but directly sent from the source UE through the air interface to the target UE. This V2X communication is referred to as sidelink-based V2X communication.

E-UTRAN (Evolved Universal Terrestrial Radio Access Network) supports a dual connectivity (DC) technology. Under a non-ideal transmission condition between base stations, the DC technology in E-UTRAN can enable a UE to simultaneously connect to two eNBs (evolved NodeBs), and to use the radio resources provided by two eNBs, which thereby increases the user data rate and reduces the switching delay. With the transition from 4G to 5G technology, the DC technology can enable an LTE system and a 5G system to work together to help improving the user data transmission rate or transmission reliability. With the development of 5G technology, it is desirable to have a higher data transmission rate and a higher reliability for V2X sidelink communications.

But existing dual connectivity technology is limited to communications between base stations, or communications between a UE and a base station. The dual connectivity technology in existing wireless interfaces are inadequate to support some of the more advanced dual connectivity techniques over sidelink that newer wireless technologies will offer. 3GPP draft R2-1708509 relates to that two UEs (UE1 and UE2) establish a direct sidelink connection on a given carrier, that UE1 triggers PC5 carrier aggregation (CA) configuration with UE2 to establish another sidelink, and that UE1 and UE2 initiate sidelink communications over the configured component carriers.

### SUMMARY

The invention is specified by the independent claims. Preferred embodiments are defined in the dependent claims.

### BRIEF DESCRIPTION OF THE DRAWINGS

Various exemplary embodiments of the present disclosure are described in detail below with reference to the following Figures. The drawings are provided for purposes of illustration only and merely depict exemplary embodiments of the present disclosure to facilitate the reader's understanding of the present disclosure. Therefore, the drawings should not be considered limiting of the breadth, scope, or applicability of the present disclosure. It should be noted that for clarity and ease of illustration these drawings are not necessarily drawn to scale.
FIG. 1 illustrates an exemplary V2X communication network in which techniques disclosed herein may be implemented, in accordance with an embodiment of the present disclosure.
FIG. 2 illustrates an exemplary communication network in which sidelink dual connectivity (DC) communication may be implemented, in accordance with an embodiment of the present disclosure.
FIG. 3 illustrates a block diagram of a user equipment (UE), in accordance with some embodiments of the present disclosure.
FIG. 4 illustrates a flow chart for a method performed by a UE for performing dual connectivity in wireless sidelink communications, in accordance with some embodiments of the present disclosure.
FIG. 5 illustrates a detailed block diagram of a sidelink dual connectivity establisher in a UE, in accordance with some embodiments of the present disclosure.
FIG. 6 illustrates a detailed block diagram of a sidelink dual connectivity resource controller in a UE, in accordance with some embodiments of the present disclosure.
FIG. 7 illustrates a block diagram of a BS, in accordance with some embodiments of the present disclosure.
FIG. 8 illustrates a flow chart for a method performed by a BS for supporting dual connectivity in wireless sidelink communications, in accordance with some embodiments of the present disclosure.
FIG. 9 illustrates a detailed block diagram of a sidelink dual connectivity establisher in a BS, in accordance with some embodiments of the present disclosure.
FIG. 10 illustrates a detailed block diagram of a sidelink resource scheduler in a BS, in accordance with some embodiments of the present disclosure.
FIG. 11 illustrates an exemplary method for establishing a broadcast sidelink DC communication, in accordance with some embodiments of the present disclosure.
FIG. 12 illustrates an exemplary method for establishing a unicast sidelink DC communication, in accordance with some embodiments of the present disclosure.
FIG. 13 illustrates another exemplary method for establishing a broadcast sidelink DC communication, in accordance with some embodiments of the present disclosure.
FIG. 14 illustrates an exemplary method for establishing a sidelink DC communication controlled by a BS, in accordance with some embodiments of the present disclosure.
FIG. 15 illustrates an exemplary method for resource configuration for a sidelink DC communication, in accordance with some embodiments of the present disclosure.
FIG. 16 illustrates an example of a sidelink split bearer in a sidelink DC communication, in accordance with some embodiments of the present disclosure.
FIG. 17 illustrates an exemplary method for bearer configuration for a sidelink DC communication, in accordance with some embodiments of the present disclosure.
FIG. 18 illustrates another exemplary method for bearer configuration for a sidelink DC communication, in accordance with some embodiments of the present disclosure.

### DETAILED DESCRIPTION OF EXEMPLARY EMBODIMENTS

Various exemplary embodiments of the present disclosure are described below with reference to the accompanying figures to enable a person of ordinary skill in the art to make and use the present disclosure. As would be apparent to those of ordinary skill in the art, after reading the present disclosure, various changes or modifications to the examples described herein can be made without departing from the scope of the present disclosure. Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

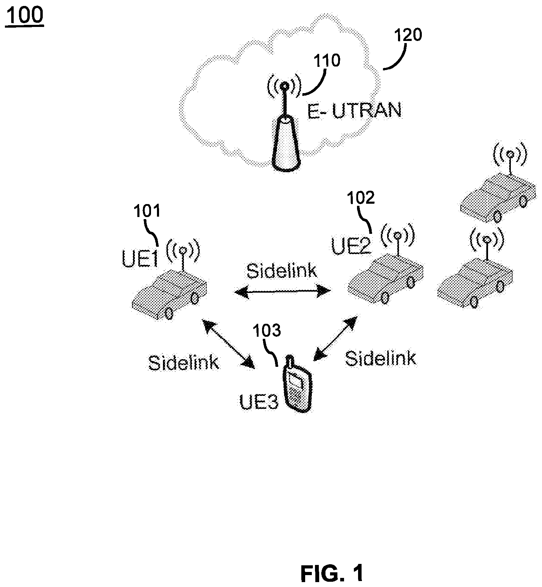

FIG. 1 illustrates an exemplary V2X communication network 100 in which techniques disclosed herein may be implemented, in accordance with an embodiment of the present disclosure. As shown in FIG. 1, multiple UEs 101, 102, 103 in the V2X communication network 100 can communicate based on sidelinks connecting each pair of the UEs. That is, traffic data is not forwarded through the base station (BS) 110 or the core network 120, but directly sent from a source UE through the air interface to a target UE. This V2X communication is referred to as sidelink-based V2X communication. An eV2X (evolved V2X) system poses a higher demand for the data rate of sidelink communications. Introducing dual connectivity (DC) technology on sidelink communications can streamline data over multiple sidelinks to increase user data rates and/or increase transmission reliability by transmitting the same data across multiple sidelinks. As sidelink communications and cellular communications are different in many aspects like communication manner, resource acquisition and scheduling, the DC technology in existing wireless interfaces are inadequate to support dual connectivity on sidelink communications.

V2X sidelink communication includes two transmission modes: mode 3 based on the base station scheduling resource and mode 4 based on the UE competition resource. In the mode 3, the UE transmits the control information and data at the designated resource according to the scheduling of the base station. In mode 4, the UE self-selects resource to transmit the control information and data based on resource monitoring of the transmission resource pool. The systems and methods disclosed in the present teaching can be used not only in a V2X network but also in a D2D network. When they are used in D2D, mode 3 is replaced by mode 1, which is also eNB scheduled sidelink resource allocation scheme; and mode 4 is replaced by mode 2, which is also UE autonomous resource selection scheme.

A sidelink DC communication may be implemented in various scenarios. In one scenario, a UE is connected to two base stations, which may be base stations under a same radio access technology (RAT) (e.g., eNB 1 and eNB2 under LTE), or base stations under different RATs (e.g., eNB 1 under LTE and gNB1 under 5G). The two base stations provide or dispatch sidelink resources for the UE respectively. The UE uses the sidelink resources provided by the two base stations to perform sidelink communications, which can be called sidelink DC communication.

In another scenario, a UE has two different types of sidelink resources. Different types of sidelink resources refer to sidelink resources mapped from different sidelink frame structures, different resource bitmaps, or sidelink resources under different RATs (such as LTE sidelink resources and NR sidelink resources). The LTE may obtain different types of sidelink resources from two base stations, or obtain two different types of sidelink resources by pre-configuration, or obtain one type of sidelink resource by pre-configuration and another type of sidelink resource from eNB / gNB. The UE uses two different types of sidelink resources for sidelink communication, which can be also called sidelink DC communication.

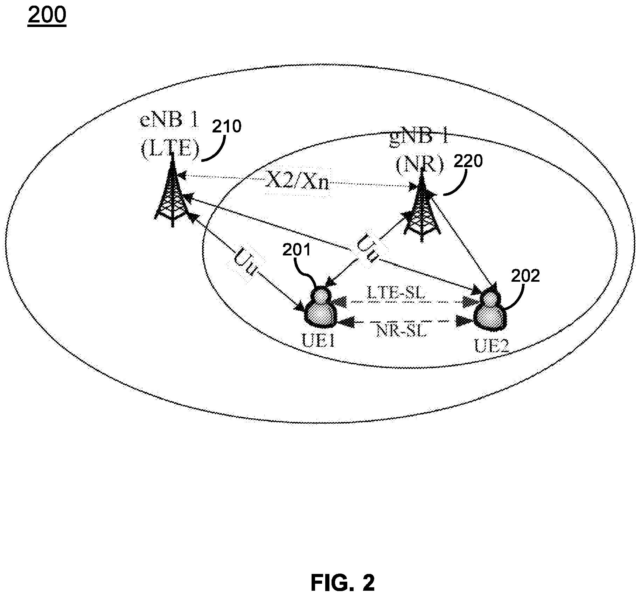

For a sidelink dual connectivity (DC), there are two sidelink media access control (MAC) entities on the PC5 interface, corresponding to two sidelinks. FIG. 2 illustrates an exemplary communication network in which sidelink DC communication may be implemented, in accordance with an embodiment of the present disclosure. As shown in FIG. 2, UE 1 201 and UE2 202 are connected to eNB 210 and gNB 220 respectively via Uu dual connectivity. The eNB 210 and gNB 220 can support sidelink communication, by providing sidelink resources. UE1 201 and UE2 202 obtain LTE sidelink resources from eNB 210, and obtain NR sidelink resources from gNB 220. LTE1 201 and UE2 202 use LTE sidelink resources and NR sidelink resources for sidelink DC communication. The sidelink using LTE sidelink resources is LTE sidelink. The sidelink using NR sidelink resource is NR sidelink. In one embodiment, one of the sidelinks is called SL1, and the other sidelink is called SL2.

The methods disclosed in the present teaching can be implemented in a cellular communication network, which includes one or more cells. Each cell may include at least one BS operating at its allocated bandwidth to provide adequate radio coverage to its intended users, e.g. UE devices. In various embodiments, a BS in the present disclosure can include, or be implemented as, a next Generation Node B (gNB), an E-UTRAN Node B (eNB), a Transmission/Reception Point (TRP), an Access Point (AP), etc. A BS and a UE device can communicate with each other via a communication link, e.g., via a downlink radio frame from the BS to the UE or via an uplink radio frame from the UE to the BS. Two UEs can communicate with each other via a sidelink. A BS and a UE may be described herein as nonlimiting examples of "communication nodes," or "nodes" generally, which can practice the methods disclosed herein and may be capable of wireless and/or wired communications, in accordance with various embodiments of the present disclosure.

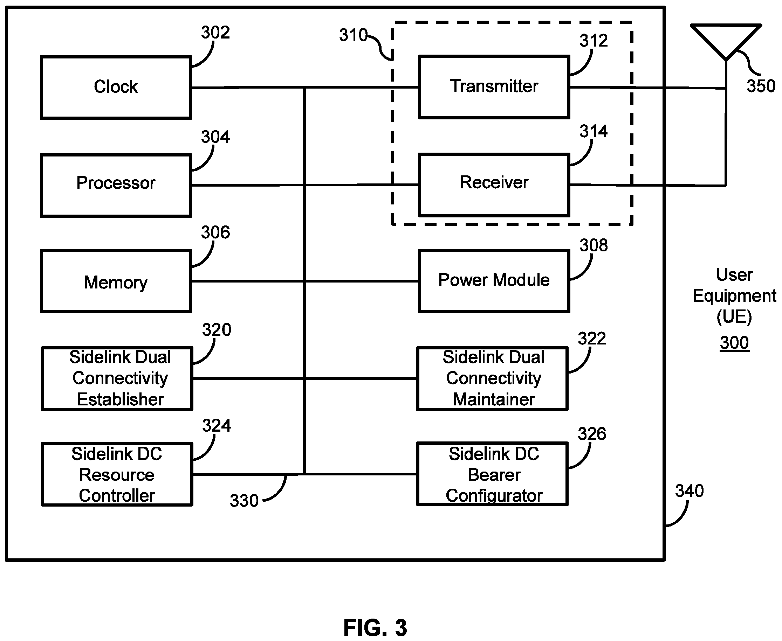

FIG. 3 illustrates a block diagram of a user equipment (UE) 300, in accordance with some embodiments of the present disclosure. The UE 300 is an example of a device that can be configured to implement the various methods described herein. As shown in FIG. 3, the UE 300 includes a housing 340 containing a system clock 302, a processor 304, a memory 306, a transceiver 310 comprising a transmitter 312 and receiver 314, a power module 308, a sidelink dual connectivity establisher 320, a sidelink dual connectivity maintainer 322, a sidelink DC resource controller 324, and a sidelink DC bearer configurator 326.

In this embodiment, the system clock 302 provides the timing signals to the processor 304 for controlling the timing of all operations of the UE 300. The processor 304 controls the general operation of the UE 300 and can include one or more processing circuits or modules such as a central processing unit (CPU) and/or any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable circuits, devices and/or structures that can perform calculations or other manipulations of data.

The memory 306, which can include both read-only memory (ROM) and random access memory (RAM), can provide instructions and data to the processor 304. A portion of the memory 306 can also include non-volatile random access memory (NVRAM). The processor 304 typically performs logical and arithmetic operations based on program instructions stored within the memory 306. The instructions (a.k.a., software) stored in the memory 306 can be executed by the processor 304 to perform the methods described herein. The processor 304 and memory 306 together form a processing system that stores and executes software. As used herein, "software" means any type of instructions, whether referred to as software, firmware, middleware, microcode, etc. which can configure a machine or device to perform one or more desired functions or processes. Instructions can include code (e.g., in source code format, binary code format, executable code format, or any other suitable format of code). The instructions, when executed by the one or more processors, cause the processing system to perform the various functions described herein.

The transceiver 310, which includes the transmitter 312 and receiver 314, allows the UE 300 to transmit and receive data to and from a remote device (e.g., the BS or another UE). An antenna 350 is typically attached to the housing 340 and electrically coupled to the transceiver 310. In various embodiments, the UE 300 includes (not shown) multiple transmitters, multiple receivers, multiple transceivers, and/or multiple antennas. The transmitter 312 can be configured to wirelessly transmit packets having different packet types or functions, such packets being generated by the processor 304. Similarly, the receiver 314 is configured to receive packets having different packet types or functions, and the processor 304 is configured to process packets of a plurality of different packet types. For example, the processor 304 can be configured to determine the type of packet and to process the packet and/or fields of the packet accordingly.

In a sidelink communication, a transmitting UE transmits data to a receiving UE via the sidelink between them directly. In accordance with various embodiments, the UE 300 may serve as either a transmitting UE or a receiving UE in a sidelink communication.

When the UE 300 serves as a transmitting UE, the sidelink dual connectivity establisher 320 may establish a sidelink DC communication with the receiving UE via two sidelinks between the two UEs. The establishment may be based on a decision of the UE 300 itself or based on an instruction from a base station covering the UE 300. After the establishment of the DC, the UE 300 may transmit, via the transmitter 312, sidelink data on at least one of the dual sidelinks to the receiving UE.

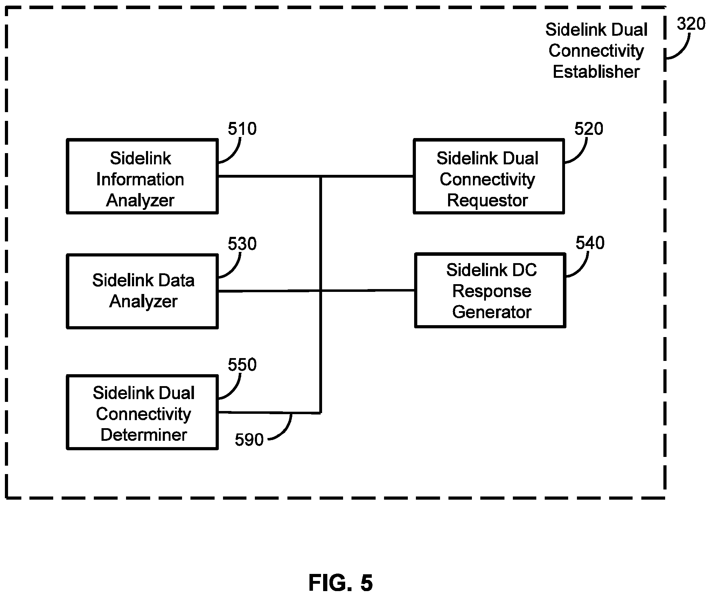

In one embodiment, the sidelink dual connectivity establisher 320 can add a second sidelink between the UE 300 and the receiving UE, while a first sidelink has been established between the two UEs. The sidelink dual connectivity establisher 320 may transmit, via the transmitter 312, a wireless signal to the receiving UE via unicast. The wireless signal carries configuration information that includes information related to at least one of the following: a frequency of the second sidelink, transmission and reception resource pool information of the second sidelink, and synchronization information of the second sidelink. The sidelink dual connectivity establisher 320 may receive, via the receiver 314, a response signal from the receiving UE. The response signal indicates whether the receiving UE accepts or rejects an addition of the second sidelink between the UE 300 and the receiving UE. A detailed diagram of the sidelink dual connectivity establisher 320 will be described with respect to FIG. 5, according one embodiment of the present teaching.

The sidelink dual connectivity maintainer 322 in this example maintains the established sidelink DC communications. In on embodiment, the sidelink dual connectivity maintainer 322 transmits, via the transmitter 312, sidelink DC modification information to the receiving UE on at least one of the first sidelink and the second sidelink. The sidelink DC modification information includes updated configuration information for at least one of the first sidelink and the second sidelink. In another embodiment, the sidelink dual connectivity maintainer 322 transmits, via the transmitter 312, sidelink DC release information to the receiving UE on at least one of the first sidelink and the second sidelink. The sidelink DC release information indicates a release of at least one of the first sidelink and the second sidelink.

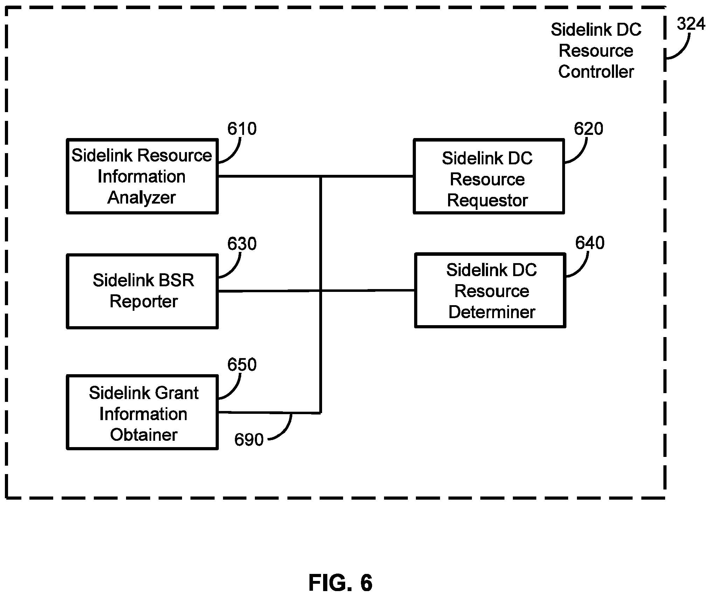

The sidelink DC resource controller 324 in this example controls communication resources for the sidelink DC communication. In one embodiment, the sidelink DC resource controller 324 obtains a first sidelink resource from a first base station and obtains a second sidelink resource from a second base station. The first sidelink resource is utilized for transmitting data on the first sidelink; while the second sidelink resource is utilized for transmitting data on the second sidelink. A detailed diagram of the sidelink DC resource controller 324 will be described with respect to FIG. 6, according one embodiment of the present teaching.

The sidelink DC bearer configurator 326 in this example requests and obtains bearer configuration for the sidelink DC communication. In one embodiment, the sidelink DC bearer configurator 326 transmits, via the transmitter 312, a sidelink DC communication interest message to the first base station. The first base station transmits a second sidelink addition request to the second base station, receives, via the receiver 314, a second sidelink addition acknowledgement message from the second base station, and generates sidelink DC bearer configuration information related to at least one of the first sidelink and the second sidelink based on the second sidelink addition acknowledgement message. The sidelink DC bearer configurator 326 may further receive, via the receiver 314, the sidelink DC bearer configuration information from the first base station. In another embodiment, the sidelink DC bearer configurator 326 transmits sidelink DC bearer configuration information to the receiving UE on one of the first sidelink and the second sidelink; and receives a sidelink DC bearer configuration acknowledge message from the receiving UE.

When the UE 300 serves as a receiving UE, the sidelink dual connectivity establisher 320 can receive, via the receiver 314, the configuration information from the transmitting UE for establishing the sidelink DC communication. The sidelink dual connectivity establisher 320 may transmit, via the transmitter 312, a response signal to the transmitting UE. The sidelink dual connectivity maintainer 322 of a receiving UE may receive, via the receiver 314, sidelink DC modification information for updating configuration information for at least one of the first sidelink and the second sidelink; and/or sidelink DC release information for releasing at least one of the first sidelink and the second sidelink. The sidelink DC resource controller 324 of a receiving UE may determine sidelink DC resources based on sidelink dedicated signaling from the transmitting UE. The sidelink DC bearer configurator 326 of a receiving UE may receive, via the receiver 314, sidelink DC bearer configuration information from the transmitting UE on one of the first sidelink and the second sidelink; and transmits, via the transmitter 312, a sidelink DC bearer configuration acknowledge message to the transmitting UE.

The power module 308 can include a power source such as one or more batteries, and a power regulator, to provide regulated power to each of the above-described modules in FIG. 3. In some embodiments, if the UE 300 is coupled to a dedicated external power source (e.g., a wall electrical outlet), the power module 308 can include a transformer and a power regulator.

The various modules discussed above are coupled together by a bus system 330. The bus system 330 can include a data bus and, for example, a power bus, a control signal bus, and/or a status signal bus in addition to the data bus. It is understood that the modules of the UE 300 can be operatively coupled to one another using any suitable techniques and mediums.

Although a number of separate modules or components are illustrated in FIG. 3, persons of ordinary skill in the art will understand that one or more of the modules can be combined or commonly implemented. For example, the processor 304 can implement not only the functionality described above with respect to the processor 304, but also implement the functionality described above with respect to the sidelink DC resource controller 324. Conversely, each of the modules illustrated in FIG. 3 can be implemented using a plurality of separate components or elements.

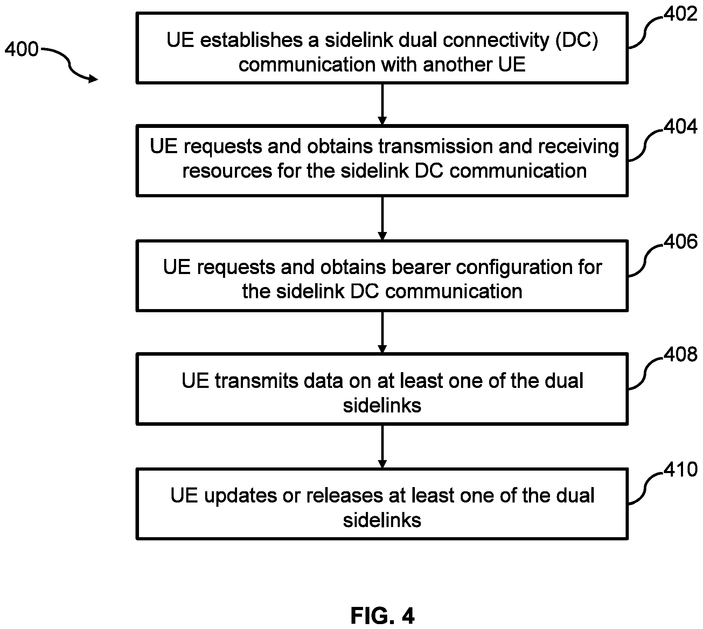

FIG. 4 illustrates a flow chart for a method 400 performed by a UE, e.g. the UE 300 as shown in FIG. 3, for performing dual connectivity in wireless sidelink communications, in accordance with some embodiments of the present disclosure. In this example, the UE 300 may serve as a transmitting UE to transmit sidelink data via dual connectivity communication.

At operation 402, the UE establishes a sidelink dual connectivity (DC) communication with another UE. At operation 404, the UE requests and obtains transmission and reception resources for the sidelink DC communication. At operation 406, the UE requests and obtains bearer configuration for the sidelink DC communication. In an alternative embodiment, the UE can autonomously generate the sidelink DC bearer. The UE transmits, at operation 408, data on at least one of the dual sidelinks. At operation 410, the UE updates or releases at least one of the dual sidelinks.

FIG. 5 illustrates a detailed block diagram of a sidelink dual connectivity establisher 320 in a UE, in accordance with some embodiments of the present disclosure. As shown in FIG. 5, the sidelink dual connectivity establisher 320 in this example includes a sidelink information analyzer 510, a sidelink dual connectivity requestor 520, a sidelink data analyzer 530, a sidelink DC response generator 540, and a sidelink dual connectivity determiner 550. The various modules in FIG. 5 are coupled together by a bus system 590, which may be further connected to the bus system 330.

When the UE serves as a transmitting UE, the sidelink information analyzer 510 in this example may receive and analyze sidelink information broadcasted by at least one of: a base station and the receiving UE. The sidelink information includes information related to at least one of the following: capability to support sidelink DC communication, available sidelink frequencies, sidelink resource type, sidelink resource pool information, and sidelink synchronization information. The UE, via the sidelink dual connectivity determiner 550, may then generate and broadcast a wireless signal based on the sidelink information for establishing the sidelink DC communication. The wireless signal carries sidelink control information that includes at least one of: a sidelink DC indication indicating the UE is performing sidelink DC transmission, a frequency of the second sidelink, a resource of the second sidelink.

The sidelink dual connectivity requestor 520 in this example may transmit a sidelink DC communication interest message to a first base station. The first base station determines whether to support the UE for sidelink DC communication based on at least one of: a sidelink DC triggering factor and a negotiation with a second base station. For example, the first base station transmits a second sidelink addition request to the second base station, and receives, via the receiver 514, a second sidelink addition acknowledgement message from the second base station. The second sidelink addition request and acknowledgement can be used for sidelink resource request and sidelink DC bearer configuration respectively. The sidelink dual connectivity requestor 520 may receive an instruction from the first base station for instructing the UE to initiate a sidelink DC communication. The wireless signal may be generated based on the instruction.

The sidelink data analyzer 530 in this example can analyze data to be transmitted on a sidelink. For example, the sidelink data analyzer 530 may determine that: an amount of the data to be transmitted on a sidelink is large; the first sidelink is congested or fully loaded; the UE wants to increase a sidelink transmission data rate; the UE wants to improve reliability of a sidelink transmission; or there is a high reliability requirement for a sidelink transmission. In one embodiment, with characteristics of service and data packets as well as rules and thresholds preconfigured or configured by eNB, UE determines whether to establish a sidelink DC communication or add a second sidelink. The characteristics may include: priority, requirement of data rate/reliability level, QoS class identifier (QCI), service type, and other information from an upper layer, e.g. an explicit indication received from an upper layer for performing sidelink DC communication. The rules and thresholds may include: a threshold of an amount of data to be transmitted, a threshold of channel busy ratio, a threshold of sidelink transmission data rate, a threshold of sidelink transmission reliability level, a threshold of priority level, a threshold of QCI. The sidelink data analyzer 530 may send the analyzing result to the sidelink dual connectivity determiner 550 for determining an establishment of sidelink DC or an addition of a second sidelink.

The sidelink dual connectivity determiner 550 in this example can determine an establishment of sidelink DC or an addition of a second sidelink, based on: the analyzing result of the sidelink data analyzer 530, an explicit indication received from an upper layer for performing sidelink dual connectivity communication, a preconfigured threshold, and/or a threshold received from a base station. The sidelink dual connectivity determiner 550 may generate the wireless signal based on a decision of the UE, or following an instruction from the base station.

When the UE serves as a receiving UE, the sidelink information analyzer 510 in this example may broadcast sidelink information to the transmitting UE. The sidelink DC response generator 540 of a receiving UE may generate a response signal and transmit the response signal to the transmitting UE. The response signal indicates whether the receiving UE accepts or rejects an addition of the second sidelink between the two UEs. The sidelink dual connectivity determiner 550 of a receiving UE may determine an establishment of sidelink DC or an addition of a second sidelink based on the response of the sidelink DC response generator 540.

FIG. 6 illustrates a detailed block diagram of a sidelink dual connectivity resource controller 324 in a UE, in accordance with some embodiments of the present disclosure. As shown in FIG. 6, the sidelink DC resource controller 324 in this example includes a sidelink resource information analyzer 610, a sidelink DC resource requestor 620, a sidelink buffer status report (BSR) reporter 630, a sidelink DC resource determiner 640, and a sidelink grant information obtainer 650. The various modules in FIG. 6 are coupled together by a bus system 690, which may be further connected to the bus system 330.

When the UE serves as a transmitting UE, the sidelink resource information analyzer 610 in this example may receive and analyze sidelink resource information from the first base station. The sidelink resource information is generated by the second base station and forwarded by the first base station and includes information related to at least one of: a sidelink reception resource pool of the second base station and a sidelink exceptional transmission resource pool of the second base station.

The sidelink DC resource requestor 620 in this example may transmit a sidelink DC communication resource request to the first base station. The first base station forwards the sidelink DC communication resource request to the second base station and receives sidelink resource configuration information for the second sidelink from the second base station. The sidelink DC resource determiner 640 in this example can determine sidelink DC communication resources, e.g. by receiving the sidelink resource configuration information forwarded by the first base station.

The sidelink BSR reporter 630 in this example may transmit a sidelink buffer status report (BSR) to the second base station by an uplink grant that is included in the sidelink resource configuration information. The second base station assigns sidelink grant information for the second sidelink based on the sidelink BSR. In one embodiment, the sidelink BSR reporter 630 also transmits a sidelink BSR to the first base station. When the sidelink BSR indicates respective buffer statuses of the first sidelink and the second sidelink, the first base station forwards the buffer status of the second sidelink to the second base station. When the sidelink BSR indicates a sum of buffer statuses of the first sidelink and the second sidelink, the first base station transmits information related to at least one of the following to the second base station: the sidelink BSR, an amount or ratio of sidelink resources allocated by the first base station, and a desired amount or ratio of sidelink resources to be allocated by the second base station.

The sidelink grant information obtainer 650 in this example can receive sidelink grant information from the second base station, e.g. by a sidelink vehicle-to-everything radio network temporary identifier (SL-V-RNTI) that is included in the sidelink resource configuration information. In one embodiment, the sidelink grant information obtainer 650 may receive first sidelink grant information from the first base station, and receive second sidelink grant information from the second base station.

When the UE serves as a receiving UE, the sidelink DC resource determiner 640 in this example may determine sidelink DC communication resources, e.g. by receiving the sidelink resource configuration information forwarded by the first base station or the transmitting UE. The sidelink grant information obtainer 650 of a receiving UE may obtain sidelink grant information respectively from base station or from the transmitting UE.

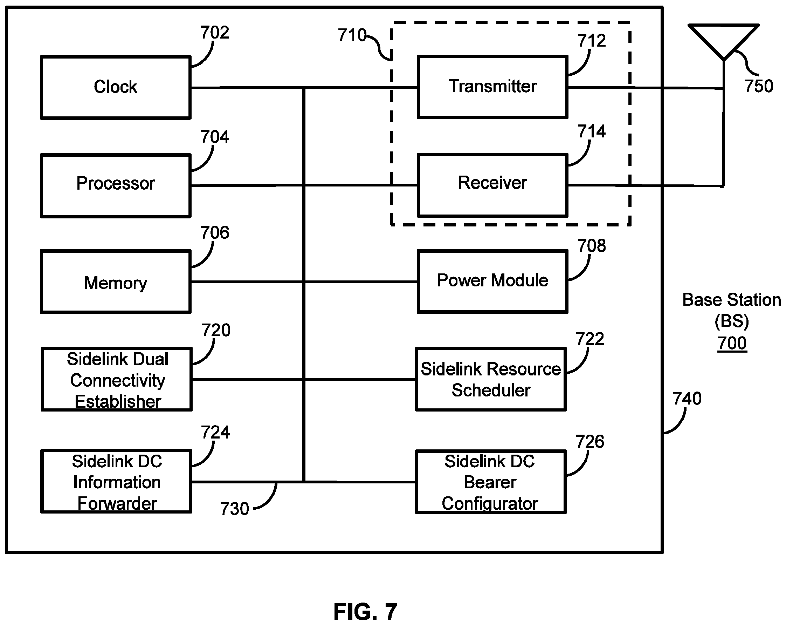

FIG. 7 illustrates a block diagram of a base station (BS) 700, in accordance with some embodiments of the present disclosure. The BS 700 is an example of a device that can be configured to implement the various methods described herein. As shown in FIG. 7, the BS 700 includes a housing 740 containing a system clock 702, a processor 704, a memory 706, a transceiver 710 comprising a transmitter 712 and a receiver 714, a power module 708, a sidelink dual connectivity establisher 720, a sidelink resource scheduler 722, a sidelink DC information forwarder 724, and a sidelink DC bearer configurator 726.

In this embodiment, the system clock 702, the processor 704, the memory 706, the transceiver 710 and the power module 708 work similarly to the system clock 302, the processor 304, the memory 306, the transceiver 310 and the power module 308 in the UE 300. An antenna 750 is typically attached to the housing 740 and electrically coupled to the transceiver 710.

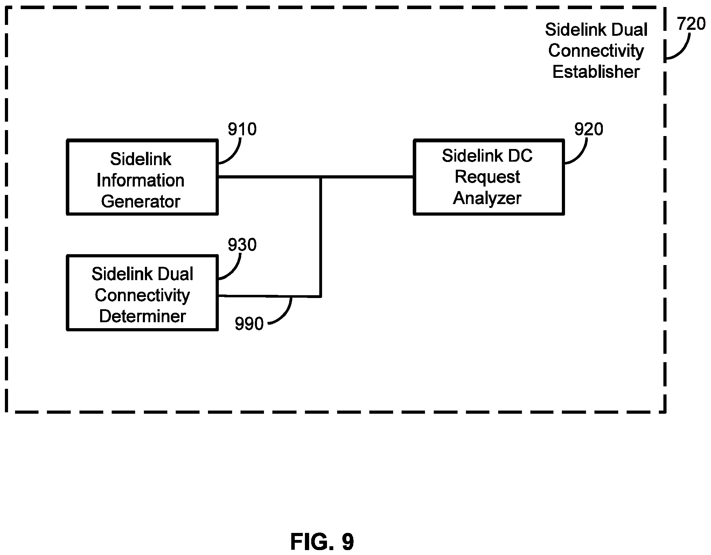

The sidelink dual connectivity establisher 720 may receive, via the receiver 714, a sidelink DC communication interest message from a UE (transmitting UE). The message indicates an interest of the UE to transmit data on a first sidelink and a second sidelink to another UE (receiving UE). The sidelink dual connectivity establisher 720 can determine to support the transmitting UE for a sidelink DC communication, and transmit, via the transmitter 712, a wireless signal to the transmitting UE for instructing the transmitting LTE to initiate the sidelink DC communication. A detailed diagram of the sidelink dual connectivity establisher 720 will be described with respect to FIG. 9, according one embodiment of the present teaching.

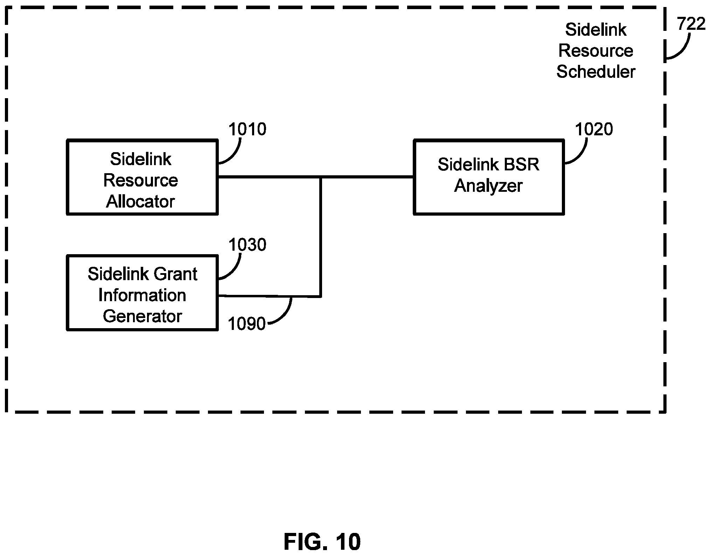

The sidelink resource scheduler 722 in this example schedules communication sources for the sidelink DC communication between the two UEs. A detailed diagram of the sidelink resource scheduler 722 will be described with respect to FIG. 10, according one embodiment of the present teaching.

The sidelink resource scheduler 724 in this example forwards sidelink DC related information between the transmitting UE and another BS. For example, the BS 700 serves as a master node, and cooperates with a secondary node to support the sidelink DC communication. When the secondary node does not send the system broadcast message, the secondary node can exchange DC related information through X2 or Xn interface with the master node. The master node can help to forward the DC related information between the secondary node and the UE. The sidelink DC related information may include at least one of the following: sidelink resource information, a sidelink DC communication resource request, sidelink resource configuration information, a sidelink DC communication interest message, a second sidelink addition request, a second sidelink addition acknowledgement message, and/or a buffer status of the second sidelink related to the secondary node.

The sidelink DC bearer configurator 726 in this example generates bearer configuration for the sidelink DC communication. In one embodiment, the sidelink DC bearer configurator 726 generates sidelink DC bearer configuration information related to at least one of the first sidelink and the second sidelink based on the second sidelink addition acknowledgement message; and transmits, via the transmitter 712, the sidelink DC bearer configuration information to the UE.

The various modules discussed above are coupled together by a bus system 730. The bus system 730 can include a data bus and, for example, a power bus, a control signal bus, and/or a status signal bus in addition to the data bus. It is understood that the modules of the BS 700 can be operatively coupled to one another using any suitable techniques and mediums.

Although a number of separate modules or components are illustrated in FIG. 7, persons of ordinary skill in the art will understand that one or more of the modules can be combined or commonly implemented. For example, the processor 704 can implement not only the functionality described above with respect to the processor 704, but also implement the functionality described above with respect to the sidelink dual connectivity establisher 720. Conversely, each of the modules illustrated in FIG. 7 can be implemented using a plurality of separate components or elements.

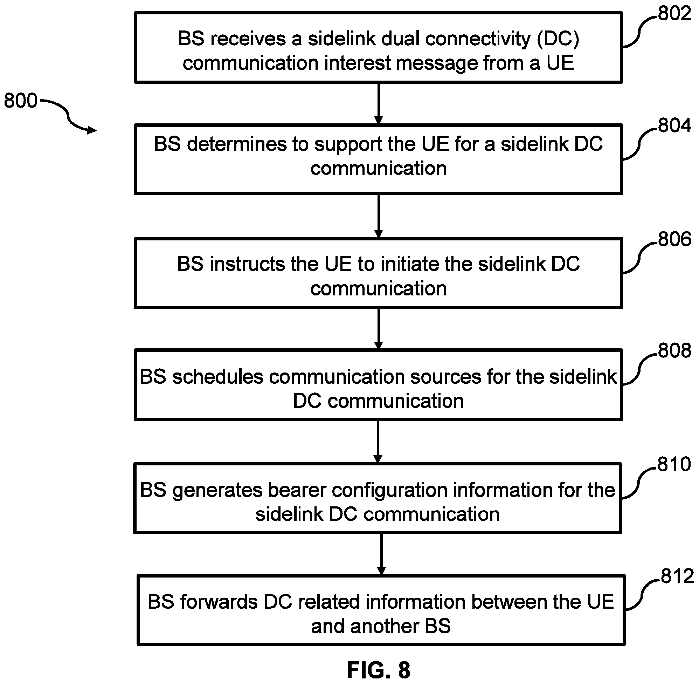

FIG. 8 illustrates a flow chart for a method 700 performed by a BS, e.g. the BS 700 in FIG. 7, for supporting dual connectivity in wireless sidelink communications, in accordance with some embodiments of the present disclosure. At operation 802, a BS receives a sidelink dual connectivity (DC) communication interest message from a UE. The BS determines at operation 804 to support the UE for a sidelink DC communication. The BS instructs at operation 806 the UE to initiate the sidelink DC communication. At operation 808, the BS schedules communication sources for the sidelink DC communication. The BS generates at operation 810 bearer configuration information for the sidelink DC communication. The BS forwards at operation 812 DC related information between the UE and another BS.

FIG. 9 illustrates a detailed block diagram of a sidelink dual connectivity establisher 720 in a BS, in accordance with some embodiments of the present disclosure. As shown in FIG. 9, the sidelink dual connectivity establisher 720 in this example includes a sidelink information generator 910, a sidelink DC request analyzer 920, and a sidelink dual connectivity determiner 930. The various modules in FIG. 9 are coupled together by a bus system 990, which may be further connected to the bus system 730.

The sidelink information generator 910 in this example may generate and broadcast sidelink information to at least one of the two UEs. The sidelink information includes information related to at least one of the following: capability to support sidelink DC communication, available sidelink frequencies, sidelink resource type, sidelink resource pool information, and sidelink synchronization information.

The sidelink DC request analyzer 920 in this example may receive and analyze a sidelink dual connectivity (DC) communication interest message from a UE (transmitting UE). The message indicates an interest of the UE to transmit data on a first sidelink and a second sidelink to another UE.

The sidelink dual connectivity determiner 930 in this example may determine to support the transmitting UE for a sidelink DC communication, and transmit a wireless signal to the transmitting UE for instructing the transmitting UE to initiate the sidelink DC communication.

FIG. 10 illustrates a detailed block diagram of a sidelink resource scheduler 722 in a BS, in accordance with some embodiments of the present disclosure. As shown in FIG. 10, the sidelink resource scheduler 722 in this example includes a sidelink resource allocator 1010, a sidelink BSR analyzer 1020, and a sidelink grant information generator 1030. The various modules in FIG. 10 are coupled together by a bus system 1090, which may be further connected to the bus system 730.

The sidelink resource allocator 1010 in this example may allocate a first sidelink resource to the transmitting UE. The first sidelink resource is utilized by the transmitting UE for transmitting data on the first sidelink. A second sidelink resource is allocated by a second base station (e.g. a secondary base station) to the transmitting UE and is utilized by the transmitting UE for transmitting data on the second sidelink.

The sidelink BSR analyzer 1020 in this example may receive and analyze a sidelink buffer status report (BSR) from a UE (transmitting UE). When the sidelink BSR indicates respective buffer statuses of the first sidelink and the second sidelink, the BS 700 (serving as a first base station in this example) forwards the buffer status of the second sidelink to the second base station. When the sidelink BSR indicates a sum of buffer statuses of the first sidelink and the second sidelink, the BS 700 transmits information related to at least one of the following to the second base station: the sidelink BSR, an amount or ratio of sidelink resources allocated by the first base station, and a desired amount or ratio of sidelink resources to be allocated by the second base station.

The sidelink grant information generator 1030 in this example may generate and transmit first sidelink grant information to the transmitting UE. The second base station transmits second sidelink grant information to the transmitting UE.

Different embodiments of the present disclosure will now be described in detail hereinafter. It is noted that the features of the embodiments and examples in the present disclosure may be combined with each other in any manner without conflict.

In one embodiment, with characteristics of service and data packets as well as rules and thresholds preconfigured or configured by eNB, UE determines whether to establish a sidelink DC communication or add a second sidelink. The characteristics may include: priority, requirement of data rate/reliability level, QoS class identifier (QCI), service type, and other information from an upper layer, e.g. an explicit indication received from an upper layer for performing sidelink DC communication. The rules and thresholds may include: a threshold of an amount of data to be transmitted, a threshold of channel busy ratio, a threshold of sidelink transmission data rate, a threshold of sidelink transmission reliability level, a threshold of priority level, a threshold of QCI.

In another embodiment, the eNB may auxiliary initiate the SL DC communication. The eNB may send a SL DC communication threshold in the system message, and the UE within the coverage may decide whether to initiate SL DC communication based on the SL DC communication threshold. For a data volume threshold: the UE can initiate SL DC communication when the amount of data to be sent by the UE is greater than the threshold. For a sidelink congestion degree / level threshold: when the UE sidelink congestion level is higher than the threshold, the UE can initiate SL DC communication. For a reliability level threshold: when UE service reliability requirement is higher than the threshold, the UE can initiate SL DC communication. For a data transmission rate threshold: when a desired UE service transmission rate is higher than the threshold, the UE may initiate SL DC communication.

The current car network sidelink communication is based on broadcast communication. With more application scenarios and higher performance requirements of the car network communication, a unicast sidelink communication in a car network may also be supported. In a broadcast sidelink DC communication, the UEs cannot negotiate about configurations related to the SL DC communication, which affects the reliability and integrity of packet reception. In a unicast sidelink DC communication, configurations related to the SL DC communication can be negotiated between UEs or be configured by eNB, to ensure performance of the SL DC communication.

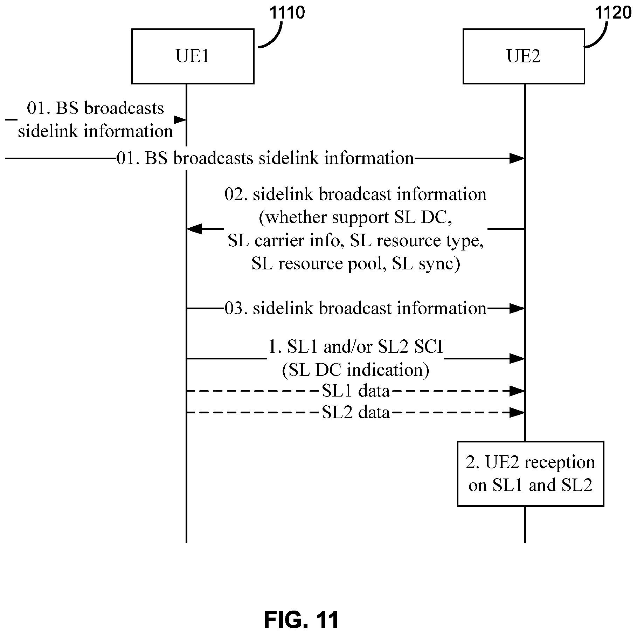

In one embodiment, the UE initiates SL DC communication autonomously. FIG. 11 illustrates an exemplary method for establishing a broadcast sidelink DC communication, in accordance with some embodiments of the present disclosure. As shown in FIG. 11, for broadcast sidelink DC communications, UE1 1110 and UE2 1120 receive sidelink information (at operation 01) broadcasted by the base station in the system message, or UE1 1110 receives sidelink information (at operation 02) periodically broadcasted on the sidelink by UE2 1120, or UE1 1110 periodically broadcasts sidelink information (at operation 03) on the sidelink. The sidelink information includes at least one of the following: capability to support SL DC communication, available sidelink frequencies, available sidelink resource type, sidelink resource pool information, and sidelink synchronization information. Among them, different sidelink frequencies, different resource types and different resource pools can correspond to different sidelink synchronization information. The transmitting UE carries the SL DC communication indication information in the sidelink control information (SCI) and may further indicate split or duplication. The receiving UE, if it receives the SL DC communication indication information, may further receive sidelink traffic on other types of sidelink resources on other carrier supported by the receiving UE, based on its received or own sidelink information.

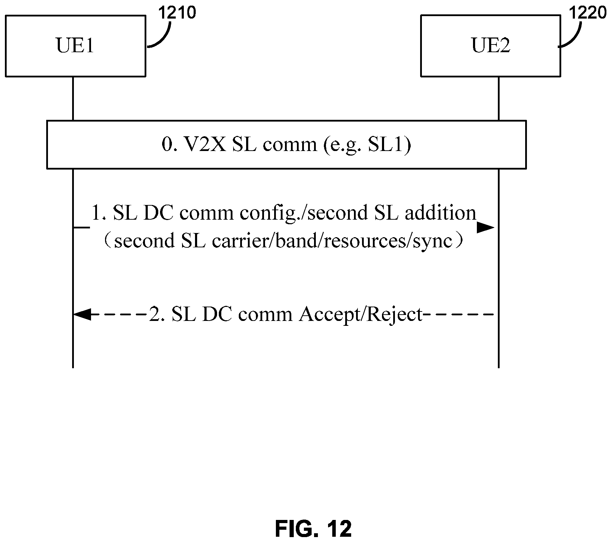

FIG. 12 illustrates an exemplary method for establishing a unicast sidelink DC communication, in accordance with some embodiments of the present disclosure. As shown in FIG. 12, for unicast sidelink DC communications, if UE1 1210 and UE2 1220 have already performed sidelink communication, and if UE1 1210 has any SL DC triggering factor, UE1 1210 sends SL DC communication configuration information or second SL addition information to the peer UE (UE2 1220), including at least one of the following: frequency of the second SL (SL2), transmitting and/or reception resource pool information of the second SL, synchronization information of the second SL. The UE2 1220 receives data on the SL2 according to the received second SL resource pool information. Alternatively, since UE2 1220 does not necessarily have the capability to receive data on SL2, UE2 1220 may send a SL DC communication accept / reject message to UE1 1210. Further, if UE2 1220 also has data to be transmitted to UE1 1210, UE2 1220 may include SL DC transmission resource pool information of UE2 1220 in the SL DC communication accept message, so that UE1 1210 may receive data transmitted from UE2 1220 on SL1 and SL2.

Currently, the unicast communication connection on sidelink is established via higher layer signaling, which is transparent on the PC5 AS layer. For SL DC communications, there are two sidelink communication links. In one embodiment, the PC5 AS layer can identify and distinguish the two different sidelinks. As such, sidelink measurements can be performed respectively on the two sidelinks, and other functions can be subsequently supported on the two sidelinks respectively. An establishment of sidelink unicast communication connection in the PC5 AS layer can identify and/or distinguish between different sidelinks.

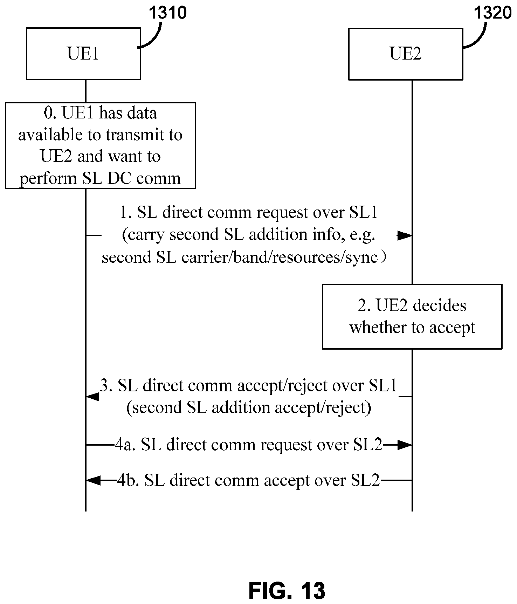

FIG. 13 illustrates another exemplary method for establishing a unicast sidelink DC communication, in accordance with some embodiments of the present disclosure. As shown in FIG. 13, UE1 1310 and UE2 1320 have not yet performed sidelink communication, and UE1 1310 has data to be transmitted to UE2 1320 and wants to perform SL DC communication. UE1 1310 transmits a sidelink direct communication request over SL1 via PC5 AS signaling, which can carry SL2 addition information as well. After UE2 1320 receives the request, UE2 1320 will decide whether to accept the SL1 direct communication request and the SL2 addition request according to its own capability or resource situation, and then send a sidelink direct communication acceptance / rejection message to UE1 1310 on SL1. If UE2 1320 sends feedback to accept the SL1 direct communication request and accepts the SL2 addition, UE1 1310 sends a sidelink direct communication request on SL2 via PC5 AS signaling and receives the sidelink direct communication accept response sent by UE2 1320.

In the process of SL DC communication between UE1 1310 and UE2 1320, if any configuration information of SL1 or SL2 changes, UE1 1310 sends SL DC communication modification information on SL1 or SL2, including updated SL1 or SL2 configuration information.

After a period of time, if LJE1 1310, UE2 1320 does not need to perform SL DC communication, such as no pending data or one of the sidelink resources is sufficient or the channel quality is good, the UE initiates SL DC release. Specifically, UE1 1310 sends SL DC release information to UE2 1320, which may include released sidelink(s) to release SL1, SL2, or both.

If UE1 is connected to eNB1, and if the sidelink resource is obtained from eNB1 and another type of sidelink resource (such as NR SL resource) is pre-configured, the UE1 may inform eNB1 that it is performing SL DC communication after establishing SL DC communication. For example, UE1 may indicate that it is performing SL DC communication in the sidelink UE information message.

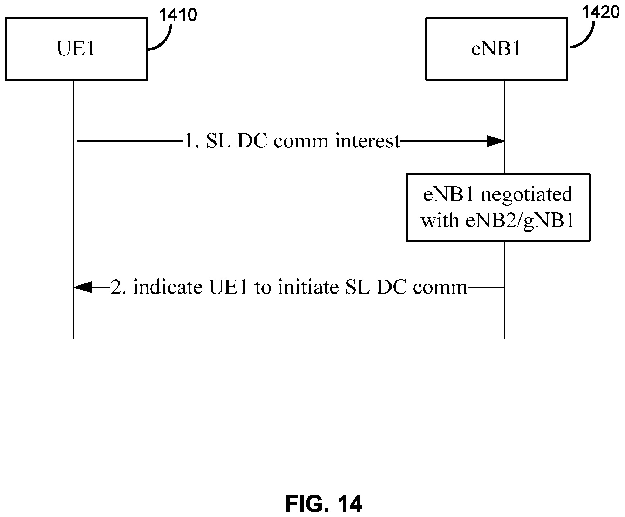

For a UE connected to a base station or maintaining a dual connection at the Uu interface with two base stations, it is possible for the base station to control its SL DC communication. FIG. 14 illustrates an exemplary method for establishing a sidelink DC communication controlled by a BS, in accordance with some embodiments of the present disclosure. As shown in FIG. 14, UE1 1410 sends an SL DC communication interest indication to eNB1 1420 (master node), which determines whether to support UE1 1410 for SL DC communication after in consultation with eNB2 / gNB1. In particular, eNB1 1420 forwards the SL DC interest indication of UE1 1410 to eNB2. If eNB2 is willing to provide sidelink resources for UE1 1410, eNB2 sends to eNB1 1420 the SL DC accept information with respect to UE1 1410, and eNB1 1420 instructs UE1 1410 to initiate SL DC communication. The SL DC communication interest indication information may be sent via the sidelink UE information or the newly defined RRC signaling message.

For a UE that maintains a dual connection at the Uu interface, as shown in FIG. 2, the sidelink resource needs to be allocated by the connected base stations.

In one embodiment, the Secondary Node (SN) does not send the system broadcast message. The SN needs to send the following to the Master Node (MN) through X2 / Xn interface (when the master node is connected to EPC, the interface between MN and SN is X2, and when the master node is connected to 5GC, the interface between MN and SN is Xn): the sidelink communication reception resource pool, and the sidelink communication exceptional transmission resource pool. The MN sends the sidelink resource pool information of the SN to the UE through system messages or RRC dedicated signaling.

Because resource configuration / scheduling of MN and SN are independent of each other, the system can support SL1 and SL2 with different resource allocation modes. For example, the system can configure resources on SL1 for mode 3, and configure resources on SL2 for mode 4. In particular, the resource allocations for SL1 and SL2 are likely to be different for UEs that are covered by a single BS and pre-configured with another type of sidelink resources.

If SN does not establish signaling radio bearer (SRB) (e.g. SN does not support RRC connection establishment, or SN has RRC but has not yet established SRB), SN needs to configure sidelink resources for UE through MN. In one example, the sidelink resource provided by the MN for the UE is used for SL1 communication and the sidelink resource provided by the SN for the UE is used for SL2 communication. First, the UE requests the SL DC communication resource from the MN, such as by sending a SL DC communication interest indication or a second sidelink addition request to the MN. Then, the MN requests the SN to configure the sidelink resource for the UE, which can carry: the resource configuration mode configured by MN for the UE (mode 3 or mode 4), and a desirable resource allocation mode provided by SN for the UE. Then SN sends resource configuration information to MN. SN may configure mode 3 resources or mode 4 resources for UE.

If the SN configures mode 3 resources for the UE, the resource configuration information sent by the SN to the MN may include: the SL-V-RNTI assigned by SN to the UE, the UL grant and the C-RNTI assigned by SN to the UE for the UE to send the SL BSR. The MN forwards the resource configuration information of the SN to the UE, and the UE needs to further send the requested amount of sidelink resource to the MN / SN and obtain the sidelink resource.

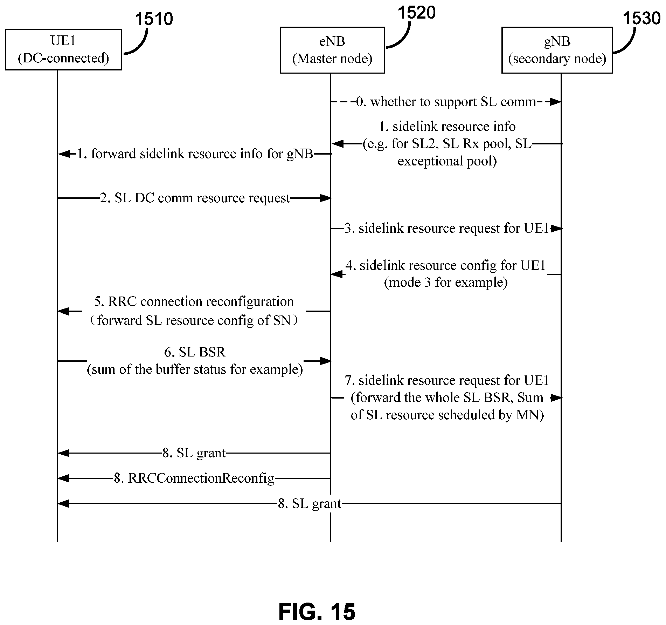

FIG. 15 illustrates an exemplary method for resource configuration for a sidelink DC communication, in accordance with some embodiments of the present disclosure. FIG. 15 shows a signaling flow diagram where the SN provides the mode 3 resource for the UE. In one embodiment, step 0 in FIG. 15 is optional. In another embodiment, step 2 in FIG. 15 can be before steps 0 and 1.

If the UE 1510 receives the C-RNTI and UL grant allocated by the SN 1530, the UE 1510 can use the UL grant to send the SL BSR directly to the SN 1530. The SN 1530 assigns the SL grant to the UE 1510 according to the SL BSR sent by the UE 1510. The UE 1510 receives the SL grant by the SL-V-RNTI.

If the UE 1510 does not receive the UL grant allocated by the SN 1530, the UE 1510 requests the resource from the SN 1530 through the MN 1520. Specifically, the UE 1510 sends the SL BSR to the MN 1520, and the SL BSR can indicate the buffer status of SL1 and SL2 respectively, or the sum of the buffer statuses of SL1 and SL2. If it indicates the buffer status of SL1 and SL2 respectively, the MN 1520 forwards the SL2 BSR to the SN 1530 on the X2 / Xn interface, and the SN 1530 directly sends the SL grant to the UE 1510 through the Uu interface. If it is the sum, the MN 1520 and the SN 1530 negotiate how many SL grants are assigned to SL1 and SL2 respectively. For example, the MN 1520 forwards the SL BSR to the SN 1530 and sends to the SN 1530 the total amount of sidelink resources the MN 1520 is willing to provide. In another example, MN 1520 and SN 1530 have negotiated the sidelink resource configuration ratio in advance. Then MN 1520 forwards the SL BSR to the SN 1530, which configures the sidelink resource for the UE 1510 according to the negotiated ratio. MN 1520 and SN 1530 send the SL grant directly to the UE 1510 through the Uu port. If the MN 1520 provides mode 4 resources for the UE 1510, the SL BSR sent by the UE 1510 to the MN 1520 is the BSR of the SL2, and the MN 1520 forwards the SL BSR to the SN 1530.

The SL BSR can indicate the buffer status of SL1 and SL2 respectively as follows. The eNB maps the logical channels of SL1 and SL2 to different logical channel groups (LCGs). For example, the logical channels of SL1 are placed in LCG0 and LCG1, and the logical channels of SL2 are placed in LCG2 and LCG3. The eNB can know the buffer status of SL1 and SL2 respectively according to the LCG in the SL BSR reported by the UE. There are currently four LCGs, while the number of LCGs may be extended (e.g. from 4 to 8). The default new LCG may be used to indicate the buffer status of SL2, or the eNB specifies which LCGs are used for SL1 and which LCGs are used for SL2, in a way similar as above.

If the SN configures the mode 4 resource for the UE, the resource configuration information sent by the SN to the MN may include: the sidelink communication transmitting resource pool. The MN forwards the resource configuration information of the SN to the UE.

If the SN has established an SRB, the UE can request the sidelink resource from the SN directly through the RRC signaling. After receiving the sidelink resources from the MN and SN, the UE can initiate SL DC communication. After initiating the SL DC communication, the UE may inform the MN that it is performing SL DC communication.

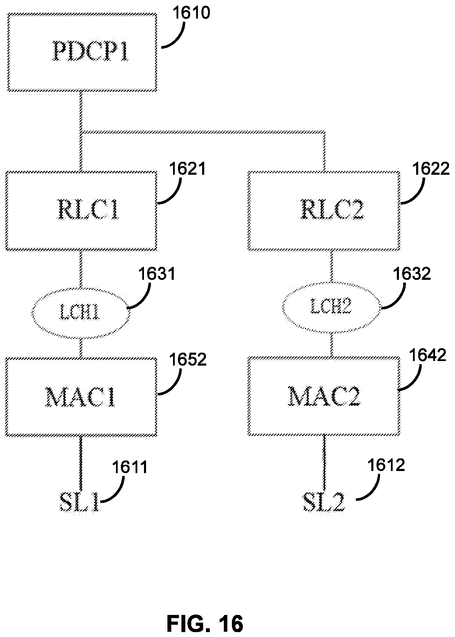

For a SL DC bearer configuration, a SL DC bearer Type may include: SL1 bearer, SL2 bearer, and SL1 / SL2 split bearer. SL1 split bearer means only SL1 has packet data convergence protocol (PDCP) entity, and the second branch/leg (RLC entity and logical channel) is on SL2. SL2 split bearer means only SL2 has PDCP entity, and the second branch is on SL1. For SL1 / SL2 split bearer, each PDCP entity corresponds to two radio link control (RLC) entities / logical channels / MAC entities on SL1 and SL2, respectively. FIG. 16 illustrates an example of an SL1 split bearer in a sidelink DC communication, in accordance with some embodiments of the present disclosure.

There two configurations for establishing a SL DC bearer: 1) negotiation between UEs: negotiation between UEs when the UEs are without coverage, or if it is not desired for the network to control sidelink bearer establishment; 2) MN / SN involved: for the connected UEs or the UEs that maintain the dual connection at the Uu interface, the sidelink bearer establishment can be controlled by the MN / SN when it is desirable to control the sidelink resource configuration / bearer establishment by the network.

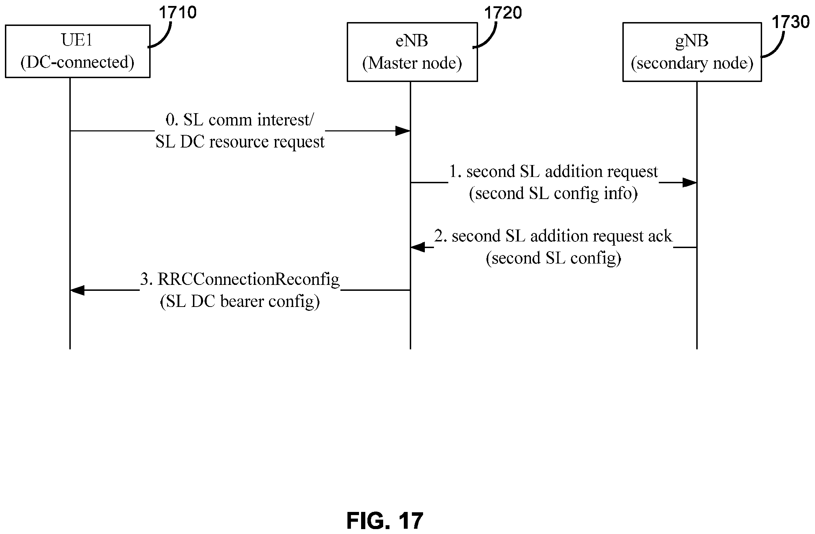

FIG. 17 illustrates an exemplary method for MN/SN involved bearer configuration for a sidelink DC communication, in accordance with some embodiments of the present disclosure. If the UE1 1710 maintaining a dual connectivity at the Uu port wants to perform dual-connection communication on the sidelink (such as step 0, the UE1 1710 sends SL DC communication interest or the resource request to the MN 1720), the MN 1720 negotiates with SN 1730 about SL DC bearer configuration.

At step 1, the MN 1720 sends the second SL (SL2) addition request to the SN 1730, including at least one of the following: the QoS parameters of the sidelink radio bearer (SLRB) expected to perform SL DC transmission, data split indication, data duplication indication, SLRB list to be modified, SLRB list to be released, SL2 measurement result. The data split indication indicates that the split SLRB is used for data split transmission. The data duplication indication indicates that split bearer is used for data duplication transmissions.

At step 2, SN 1730 sends the SL2 addition request acknowledgment message to the MN 1720, including at least one of the following: the SLRB list confirmed to be split bearers, the modified SLRB list, the released SLRB list. For the SLRB list confirmed to be split bearers and the modified SLRB list, the MN 1720 performs the SL DC bearer configuration.

At step 3, MN 1720 sends SL DC bearer configuration information to UE1 1710, including at least one of: SLRB identity, bearer type conversion indication, bearer type indication, data split indication, data duplication indication, first branch PDCP configuration, first branch RLC configuration, first branch logical channel configuration, second branch RLC configuration, and second branch logical channel configuration. When the first branch is on SL1, the second branch is on SL2, or the first branch is on SL2, the second branch is on SL1. When SLRB is SL1 bearer or SL2 bearer, the bearer configuration has only the first branch related configuration.

The bearer type conversion indication includes any one of the following: SL1 split bearer is converted to SL1 bearer, SL2 split bearer is converted to SL1 bearer, SL2 bearer is converted to SL1 bearer, SL2 split bearer is converted to SL2 bearer, SL1 split bearer is converted to SL2 bearer, SL1 bearer is converted to SL2 bearer. The bearer type indication includes any of the following: SL1 bearer, SL1 split bearer, SL2 split bearer, SL2 bearer.

The first branch PDCP configuration contains at least one of the following: packet discard timer, PDCP serial number length, header compression, reordering timer, data split threshold, data split ratio, data split prioritized path indication, data duplication prioritized path indication. The data split threshold indicates that split transmission is performed when the sidelink data is greater than a certain value (such as m bytes). The data split ratio indicates the ratio/amount of data to be transmitted on SL1 and SL2 respectively. The data split prioritized path indication indicates which branch has priority for the split bearer data to be transmitted through when the sidelink data is less than the data split threshold or when data split is deactivated. The data duplication prioritized path indication indicates that when the split bearer configured for data duplication transmissions is deactivated of the data duplication function, the data of the split bearer is preferentially transmitted through which branch.

The first branch / second branch RLC configuration contains at least one of: RLC UM (non-acknowledgment mode), RLC AM (acknowledgment mode), RLC serial number length, reordering timer, polling configuration. The first branch / second branch logical channel configuration comprises at least one of the following: a logical channel identity, a logical channel group identity, a priority, a priority bit rate, and a bucket size duration.

Currently, the MME (mobility management entity) will provide UE-PC5-AMBR (Aggregate Maximum Bit Rate) to eNB (in UE context), and UE-PC5-AMBR is used only for mode 3. In one embodiment, for the SL DC communication, the X2 / Xn interface may negotiate the UE-PC5-AMBR on the second SL (SL2), in consideration of the mode 3 resource scheduling. Specifically, (e.g., in step 1) the MN 1720 sends the UE-PC5-AMBR (which is the total aggregate maximum bit rate of LTE1 1710 at the PC5 interface, that is, the sum of PC5 aggregate bit rates on SL1 and SL2) and/or the decided UE-PC5-AMBR on SL1 and/or the desired UE-PC5-AMBR on SL2 to SN 1730. The SN 1730 determines the UE-PC5-AMBR on the SL2 based on the information sent by the MN 1720 and transmits the UE-PC5-AMBR on the SL2 to the MN 1720 (as in step 2). Further, the UE-PC5-AMBR may be considered to be used for mode 4. Specifically, the MN 1720 / eNB may send at least two of the following to the UE1 1710 by the RRC reassignment message: UE-PC5-AMBR, SL1 UE-PC5-AMBR, and SL2 UE-PC5-AMBR. Then the UE itself assures the restriction of UE-PC5-AMBR on SL1 and SL2 in the mode 4 resource selection.

If the MN 1720 knows the peer UE2 of UE1 1710, the MN 1720 may send the SL DC bearer configuration to UE2; or, UE1 1710 transmits the SL DC bearer configuration to peer UE2 via PC5 signaling on either SL1 or SL2.

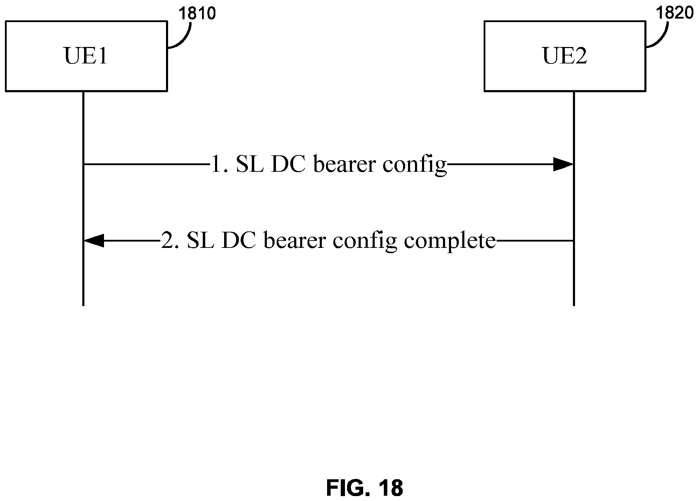

FIG. 18 illustrates another exemplary method for UE-negotiated bearer configuration for a sidelink DC communication, in accordance with some embodiments of the present disclosure. As shown in FIG. 18, UE1 1810 transmits SL DC bearer configuration information to the peer UE2 1820 through the primary sidelink link or any one of the sidelinks, in which UE1 autonomously generates the SL DC bearer configuration or received from a base station and the SL DC bearer configuration information may be the same as that in step 3 in FIG. 17. After the UE2 1820 completes the SL DC bearer configuration according to the SL DC bearer configuration information transmitted by the UE1 1810, the UE2 1820 transmits the SL DC bearer configuration completion / acknowledgment message to the UE1 1810.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques.

To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, module, etc. can be configured to perform one or more of the functions described herein. The term "configured to" or "configured for" as used herein with respect to a specified operation or function refers to a processor, device, component, circuit, structure, machine, module, etc. that is physically constructed, programmed and/or arranged to perform the specified operation or function.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method performed by a first node (UE1), the method comprising:
transmitting (404) a wireless signal to a second node (UE2), wherein a first sidelink is established (402) between the first node (UE1) and the second node (UE2), and the wireless signal carries configuration information for adding a second sidelink between the first node (UE1) and the second node (UE2); and
transmitting (408) data on at least one of the first sidelink and the second sidelink to the second node (UE2), the method **characterized in that** two types of sidelink resources are utilized for transmitting data on the first and second sidelinks, respectively; and
**in that** the two types of sidelink resources have different sidelink frame structures, have different sidelink resource bitmaps, or are scheduled by two base stations under same or different radio access technologies, RATs.

2. The method of claim 1, wherein:
each type of sidelink resource is obtained based on at least one of: an allocation from a base station and a pre-configuration.

3. The method of claim 1, further comprising generating the wireless signal based on a decision of the first node (UE1), wherein the decision is made by the first node (UE1) based on at least one of the following triggering factors:
an explicit indication received from an upper layer for performing sidelink dual connectivity communication; and
a threshold that is preconfigured or received from a base station, wherein the threshold is related to at least one of:
a threshold of an amount of data to be transmitted;
a threshold of channel busy ratio;
a threshold of sidelink transmission data rate;
a threshold of sidelink transmission reliability level;
a threshold of priority level; and
a threshold of quality of service, QoS, class identifier.

4. The method of claim 1, wherein:
the wireless signal is transmitted to the second node (UE2) via broadcast and carries sidelink control information that includes at least one of: a sidelink DC indication indicating the first node (UE1) is performing sidelink DC transmission, a frequency of the second sidelink, a resource of the second sidelink; or
the wireless signal is transmitted to the second node (UE2) via sidelink dedicated signaling and carries configuration information that includes information related to at least one of the following: a frequency of the second sidelink, transmission and reception resource pool information of the second sidelink, and synchronization information of the second sidelink.

5. The method of claim 1, further comprising:
transmitting a sidelink dual connectivity, DC, communication interest message to a first base station (eNB1), wherein the first base station (eNB1) determines whether to support the first node (UE1) for sidelink DC communication in response to the sidelink DC communication interest message;
receiving an instruction from the first base station (eNB1) for instructing the first node (UE1) to initiate a sidelink DC communication; and
generating the wireless signal based on the instruction, wherein, preferably, the sidelink DC communication interest message includes at least one of: a pre-configuration of a type of sidelink resource, and a sidelink resource request to the second base station (eNB2, gNB).

6. The method of claim 1, further comprising:
obtaining a first sidelink resource from a first base station (eNB1), wherein the first sidelink resource is utilized for transmitting data on the first sidelink; and
obtaining a second sidelink resource from a second base station (eNB2, gNB), wherein the second sidelink resource is utilized for transmitting data on the second sidelink.

7. The method of claim 6, wherein obtaining the second sidelink resource comprises:
receiving sidelink resource information from the first base station (eNB1), wherein the sidelink resource information is generated by the second base station (eNB2, gNB) and forwarded by the first base station (eNB1) and includes information related to at least one of: a sidelink reception resource pool of the second base station (eNB2, gNB) and a sidelink exceptional transmission resource pool of the second base station (eNB2, gNB).

8. The method of claim 6, further comprising:
transmitting a sidelink dual connectivity, DC, communication interest message to the first base station (eNB1); and
receiving the sidelink DC bearer configuration information from the first base station (eNB1),
wherein, preferably, the sidelink DC bearer configuration information includes information related to at least one of the following:
a sidelink radio bearer, SLRB, identity;
a bearer type conversion indication;
a bearer type indication;
a data split indication;
a data duplication indication;
a packet data convergence protocol configuration;
a radio link control, RLC, configuration of the first sidelink;
a logical channel configuration of the first sidelink;
a RLC configuration of the second sidelink;
a logical channel configuration of the second sidelink.

9. The method of claim 1, further comprising:
transmitting sidelink dual connectivity, DC, bearer configuration information to the second node (UE2) on one of the first sidelink and the second sidelink; and
receiving a sidelink DC bearer configuration acknowledge message from the second node (UE2).

10. A method performed by a first base station (eNB1), the method comprising:
receiving (802) a sidelink dual connectivity, DC, communication interest message from a first node (UE1), wherein the message indicates an interest of the first node (UE1) to transmit data on a first sidelink and a second sidelink to a second node (UE2); and
transmitting (806) a wireless signal to the first node (UE1) for instructing the first node (UE1) to initiate the sidelink DC communication, the method **characterized in that** two types of sidelink resources are utilized for transmitting data on the first and second sidelinks, respectively; and
**in that** the two types of sidelink resources have different sidelink frame structures, have different sidelink resource bitmaps, or are scheduled by two base stations under same or different radio access technologies, RATs.

11. The method of claim 10, further comprising transmitting sidelink information to at least one of the first node (UE1) and the second node (UE2), wherein the sidelink information includes information related to at least one of the following: capability to support sidelink DC communication, available sidelink frequencies, sidelink resource type, sidelink resource pool information, and sidelink synchronization information.

12. The method of claim 10, wherein: the sidelink DC communication interest message includes at least one of: a pre-configuration of a type of sidelink resource, and a sidelink resource request to a second base station (eNB2, gNB).

13. The method of claim 12, further comprising:
transmitting a second sidelink addition request to the second base station (eNB2, gNB);
receiving a second sidelink addition acknowledgement message from the second base station (eNB2, gNB);
generating sidelink DC bearer configuration information related to at least one of the first sidelink and the second sidelink based on the second sidelink addition acknowledgement message; and
transmitting the sidelink DC bearer configuration information to the first node (UE1).

14. A communication node (UE1, eNB1) configured to carry out the method of any one of claims 1 through 13.

15. A non-transitory computer-readable medium having stored thereon computer-executable instructions for carrying out the method of any one of claims 1 through 13.

## Patentansprüche

1. Verfahren, das von einem ersten Knoten (UE1) durchgeführt wird, wobei das Verfahren aufweist:
Senden (404) eines drahtlosen Signals an einen zweiten Knoten (UE2), wobei ein erster Sidelink zwischen dem ersten Knoten (UE1) und dem zweiten Knoten (UE2) hergestellt wird (402) und das drahtlose Signal Konfigurationsinformationen zum Hinzufügen eines zweiten Sidelink zwischen dem ersten Knoten (UE1) und dem zweiten Knoten (UE2) befördert; und
Senden (408) von Daten auf mindestens einem des ersten Sidelink und des zweiten Sidelink an den zweiten Knoten (UE2),
wobei das Verfahren **dadurch gekennzeichnet ist, dass**
zwei Arten von Sidelink-Ressourcen für die Übertragung von Daten auf dem ersten bzw. zweiten Sidelink verwendet werden; und dass
die zwei Arten von Sidelink-Ressourcen unterschiedliche Sidelink-Rahmenstrukturen aufweisen, unterschiedliche Sidelink-Ressourcen-Bitmaps aufweisen oder von zwei Basisstationen unter denselben oder unterschiedlichen Funkzugangstechnologien, RATs, geplant werden.

2. Verfahren nach Anspruch 1, wobei:
jeder Art der Sidelink-Ressourcen basierend auf mindestens einem erhalten wird von: einer Zuweisung von einer Basisstation und einer Vorkonfiguration.

3. Verfahren nach Anspruch 1, das ferner das Erzeugen des drahtlosen Signals basierend auf einer Entscheidung des ersten Knotens (UE1) aufweist, wobei die Entscheidung vom ersten Knoten (UE1) basierend auf mindestens einem der folgenden Auslösefaktoren getroffen wird:
einer expliziten Anzeige, die von einer oberen Schicht zum Durchführen einer Sidelink-Dualkonnektivität-Kommunikation empfangen wird; und
einem Schwellenwert, der vorkonfiguriert ist oder von einer Basisstation empfangen wird, wobei der Schwellenwert mit mindestens einem in Beziehung steht von:
einem Schwellenwert für eine zu sendende Datenmenge;
einem Schwellenwert des Kanalbelegungsgrads;
einem Schwellenwert der Sidelink-Übertragungsdatenrate;
einen Schwellenwert des Sidelink-Übertragungszuverlässigkeitspegels;
einem Schwellenwert der Prioritätsstufe; und
einen Schwellenwert der Dienstgüte, QoS, Klassenkennung.

4. Verfahren nach Anspruch 1, wobei:
das drahtlose Signal an den zweiten Knoten (UE2) über Broadcast gesendet wird und Sidelink-Steuerinformationen befördert, die mindestens eines enthalten von: einer Sidelink-DC-Anzeige, die anzeigt, dass der erste Knoten (UE1) eine Sidelink-DC-Übertragung durchführt, eine Frequenz des zweiten Sidelink, eine Ressource des zweiten Sidelink; oder
das drahtlose Signal an den zweiten Knoten (UE2) über eine dedizierte Sidelink-Signalisierung gesendet wird und Konfigurationsinformationen befördert, die Informationen enthalten, die sich auf mindestens eines der folgenden beziehen: eine Frequenz des zweiten Sidelink, Sende- und Empfangsressourcenpool-Informationen des zweiten Sidelink und Synchronisationsinformationen des zweiten Sidelink.

5. Verfahren nach Anspruch 1, das ferner aufweist:
Senden einer Sidelink-Dualkonnektivität, DC, Kommunikations-Interessensnachricht an eine erste Basisstation (eNB1), wobei die erste Basisstation (eNB1) als Reaktion auf die Sidelink-DC-Kommunikations-Interessensnachricht bestimmt, ob sie den ersten Knoten (UE1) für Sidelink-DC-Kommunikation unterstützt;
Empfangen einer Anweisung von der ersten Basisstation (eNB1) zum Anweisen des ersten Knotens (UE1), eine Sidelink-DC-Kommunikation zu initiieren; und
Erzeugen des drahtlosen Signals basierend auf der Anweisung, wobei vorzugsweise die Sidelink-DC-Kommunikations-Interessensnachricht mindestens eines enthält von: einer Vorkonfiguration einer Art einer Sidelink-Ressource und eine Sidelink-Ressourcenanforderung an die zweite Basisstation (eNB2, gNB).

6. Verfahren nach Anspruch 1, das ferner aufweist:
Erhalten einer ersten Sidelink-Ressource von einer ersten Basisstation (eNB1), wobei die erste Sidelink-Ressource zum Senden von Daten auf dem ersten Sidelink verwendet wird; und
Erhalten einer zweiten Sidelink-Ressource von einer zweiten Basisstation (eNB2, gNB), wobei die zweite Sidelink-Ressource zum Senden von Daten auf dem zweiten Sidelink verwendet wird.

7. Verfahren nach Anspruch 6, wobei das Erhalten der zweiten Sidelink-Ressource aufweist: Empfangen von Sidelink-Ressourceninformationen von der ersten Basisstation (eNB1), wobei die Sidelink-Ressourceninformationen von der zweiten Basisstation (eNB2, gNB) erzeugt und von der ersten Basisstation (eNB1) weitergeleitet werden und Informationen aufweisen, die sich auf mindestens eines beziehen von: einem Sidelink-Empfangsressourcenpool der zweiten Basisstation (eNB2, gNB) und einen Sidelink-Ausnahme-Senderessourcenpool der zweiten Basisstation (eNB2, gNB).

8. Verfahren nach Anspruch 6, das ferner aufweist:
Senden einer Sidelink-Dualkonnektivität, DC, Kommunikations-Interessensnachricht an die erste Basisstation (eNB1), und
Empfangen der Sidelink-DC-Trägerkonfigurationsinformationen von der ersten Basisstation (eNB1),
wobei vorzugsweise die Sidelink-DC-Trägerkonfigurationsinformationen Informationen enthalten, die sich auf mindestens eines der folgenden beziehen:
eine Sidelink-Funkträger, SLRB, Identität;
eine Trägerart-Umwandlungsanzeige;
eine Trägerart-Anzeige;
eine Datenaufteilungsanzeige;
eine Datenduplizierungsanzeige;
eine Paketdatenkonvergenz-Protokollkonfiguration;
eine Funkverbindungssteuerung, RLC, Konfiguration des ersten Sidelink;
eine logische Kanalkonfiguration des ersten Sidelink;
eine RLC-Konfiguration des zweiten Sidelink;
eine logische Kanalkonfiguration des zweiten Sidelink.

9. Verfahren nach Anspruch 1, das ferner aufweist:
Senden von Sidelink-Dualkonnektivität, DC, Trägerkonfigurationsinformationen an den zweiten Knoten (UE2) auf einem des ersten Sidelink und des zweiten Sidelink; und
Empfangen einer Sidelink-DC-Trägerkonfigurations-Bestätigungsnachricht vom zweiten Knoten (UE2).

10. Verfahren, das von einer ersten Basisstation (eNB1) durchgeführt wird, wobei das Verfahren aufweist:
Empfangen (802) einer Sidelink-Dualkonnektivität, DC, Kommunikationsinteressen-Nachricht von einem ersten Knoten (UE1), wobei die Nachricht ein Interesse des ersten Knotens (UE1) anzeigt, Daten auf einem ersten Sidelink und einem zweiten Sidelink zu einem zweiten Knoten (UE2) zu senden; und
Senden (806) eines drahtlosen Signals an den ersten Knoten (UE1), um den ersten Knoten (UE1) anzuweisen, die Sidelink-DC-Kommunikation zu initiieren,
wobei das Verfahren **dadurch gekennzeichnet ist, dass**
zwei Arten von Sidelink-Ressourcen für die Übertragung von Daten auf dem ersten bzw. zweiten Sidelink verwendet werden; und dass
die beiden Arten von Sidelink-Ressourcen unterschiedliche Sidelink-Rahmenstrukturen aufweisen, unterschiedliche Sidelink-Ressourcen-Bitmaps aufweisen oder von zwei Basisstationen unter denselben oder unterschiedlichen Funkzugangstechnologien, RATs, geplant werden.

11. Verfahren nach Anspruch 10, das ferner das Senden von Sidelink-Informationen an mindestens einen des ersten Knotens (UE1) und des zweiten Knotens (UE2) aufweist, wobei die Sidelink-Informationen Informationen enthalten, die sich auf mindestens eines der folgenden beziehen: Fähigkeit zur Unterstützung von Sidelink-DC-Kommunikation, verfügbare Sidelink-Frequenzen, Sidelink-Ressourcenart, Sidelink-Ressourcenpool-Informationen und Sidelink-Synchronisationsinformationen.

12. Verfahren nach Anspruch 10, wobei: die Sidelink-DC-Kommunikationsinteressen-Nachricht mindestens eines enthält von: einer Vorkonfiguration einer Art der Sidelink-Ressourcen und eine Sidelink-Ressourcenanforderung an eine zweite Basisstation (eNB2, gNB).

13. Verfahren nach Anspruch 12, das ferner aufweist:
Senden einer zweiten Sidelink-Zusatzanforderung an die zweite Basisstation (eNB2, gNB);
Empfangen einer zweiten Sidelink-Zusatzbestätigungsnachricht von der zweiten Basisstation (eNB2, gNB);
Erzeugen von Sidelink-DC-Trägerkonfigurationsinformationen, die sich auf mindestens einen des ersten Sidelink und des zweiten Sidelink beziehen, basierend auf der zweiten Sidelink-Zusatzbestätigungsnachricht; und
Senden der Sidelink-DC-Trägerkonfigurationsinformationen an den ersten Knoten (UE1).

14. Kommunikationsknoten (UE1, eNB 1), der konfiguriert ist, das Verfahren nach einem der Ansprüche 1 bis 13 auszuführen.

15. Nichtflüchtiges computerlesbares Medium, auf dem computerausführbare Befehle zum Ausführen des Verfahrens nach einem der Ansprüche 1 bis 13 gespeichert sind.

## Revendications

1. Procédé exécuté par un premier noeud (UE1), ledit procédé comprenant :
la transmission (404) d'un signal sans fil à un deuxième noeud (UE2), où une première liaison latérale est établie (402) entre le premier noeud (UE1) et le deuxième noeud (UE2), et le signal sans fil contient des informations de configuration pour ajouter une deuxième liaison latérale entre le premier noeud (UE1) et le deuxième noeud (UE2) ; et
la transmission (408) au deuxième noeud (UE2) de données sur la première liaison latérale et/ou la deuxième liaison latérale,
ledit procédé étant **caractérisé en ce que**
deux types de ressources de liaison latérale sont utilisés pour transmettre des données sur la première et la deuxième liaison latérale, respectivement ; et **en ce que**
les deux types de ressources de liaison latérale ont des structures de trame de liaison latérale différentes, des tableaux de bits de ressources de liaison latérale différents ou sont programmés par deux stations de base dans le cadre de technologies d'accès radio (RAT) identiques ou différentes.

2. Procédé selon la revendication 1, où :
chaque type de ressource de liaison latérale est obtenu sur la base : d'une attribution par une station de base et/ou d'une préconfiguration.

3. Procédé selon la revendication 1, comprenant en outre la génération du signal sans fil sur la base d'une décision du premier noeud (UE1), ladite décision étant prise par le premier noeud (UE1) sur la base d'au moins un des facteurs de déclenchement suivants :
une indication explicite reçue d'une couche supérieure pour l'exécution d'une communication à double connectivité par liaison latérale ; et
un seuil préconfiguré ou reçu d'une station de base, ledit seuil étant relatif à au moins un des seuils suivants :
un seuil de volume de données à transmettre ;
un seuil de taux d'occupation de canal ;
un seuil de débit de données de transmission de liaison latérale ;
un seuil de niveau de fiabilité de transmission de liaison latérale ;
un seuil de niveau de priorité ; et
un seuil d'identifiant de classe de qualité de service (QoS).

4. Procédé selon la revendication 1, où :
le signal sans fil est transmis par diffusion au deuxième noeud (UE2) et contient des informations de commande de liaison latérale comprenant : une indication de liaison latérale en courant continu indiquant que le premier noeud (UE1) effectue une transmission de liaison latérale en courant continu et/ou une fréquence de la deuxième liaison latérale et/ou une ressource de la deuxième liaison latérale ; ou
le signal sans fil est transmis au deuxième noeud (UE2) par une signalisation de liaison latérale dédiée et comporte des informations de configuration comprenant des informations relatives à au moins un des éléments suivants : une fréquence de la deuxième liaison latérale, des informations sur le pool de ressources de transmission et de réception de la deuxième liaison latérale, et des informations de synchronisation de la deuxième liaison latérale.

5. Procédé selon la revendication 1, comprenant en outre
la transmission d'un message d'intérêt de communication à double connectivité (DC) de liaison latérale à une première station de base (eNB1), ladite première station de base (eNB1) déterminant si elle doit prendre en charge le premier noeud (UE1) pour la communication de liaison latérale DC en réponse au message d'intérêt de communication de liaison latérale DC ;
la réception d'une instruction de la première station de base (eNB1) pour commander l'établissement d'une communication de liaison latérale DC par le premier noeud (UE1) ; et
la génération du signal sans fil sur la base de l'instruction, où le message d'intérêt de communication de liaison latérale DC comprend préférentiellement : une préconfiguration d'un type de ressource de liaison latérale et/ou une demande de ressource de liaison latérale à la deuxième station de base (eNB2, gNB).

6. Procédé selon la revendication 1, comprenant en outre
l'obtention d'une première ressource de liaison latérale depuis une première station de base (eNB1), ladite première ressource de liaison latérale étant utilisée pour transmettre des données sur la première liaison latérale ; et
l'obtention d'une deuxième ressource de liaison latérale depuis une deuxième station de base (eNB2, gNB), ladite deuxième ressource de liaison latérale étant utilisée pour transmettre des données sur la deuxième liaison latérale.

7. Procédé selon la revendication 6, où l'obtention de la deuxième ressource de liaison latérale comprend : la réception d'informations de ressource de liaison latérale de la première station de base (eNB1), lesdites informations de ressource de liaison latérale étant générées par la deuxième station de base (eNB2, gNB) et transmises par la première station de base (eNB1), et comprenant des informations relatives à : un pool de ressources de réception de liaison latérale de la deuxième station de base (eNB2, gNB) et/ou un pool de ressources de transmission exceptionnelle de liaison latérale de la deuxième station de base (eNB2, gNB).

8. Procédé selon la revendication 6, comprenant en outre
la transmission d'un message d'intérêt de communication à double connectivité (DC) de liaison latérale à la première station de base (eNB1) ; et
la réception des informations de configuration de la porteuse de liaison latérale DC en provenance de la première station de base (eNB1),
où les informations de configuration de la porteuse de liaison latérale DC comprennent préférentiellement des informations relatives à au moins un des éléments suivants :
une identité de porteuse radio de liaison latérale (SLRB) ;
une indication de conversion de type de porteuse ;
une indication de type de porteuse ;
une indication de répartition de données ;
une indication de duplication de données ;
une configuration de protocole de convergence de paquets de données ;
une configuration de commande de liaison radio (RLC) de la première liaison latérale ;
une configuration de canal logique de la première liaison latérale ;
une configuration RLC de la deuxième liaison latérale ;
une configuration de canal logique de la deuxième liaison latérale.

9. Procédé selon la revendication 1, comprenant en outre
la transmission au deuxième noeud (UE2) d'informations sur la configuration de porteuse de liaison latérale à double connectivité (DC) sur la première liaison latérale ou sur la deuxième liaison latérale ; et
la réception d'un message d'accusé de réception de configuration de porteuse de liaison latérale DC en provenance du deuxième noeud (UE2).

10. Procédé exécuté par une première station de base (eNB1), comprenant :
la réception (802) d'un message d'intérêt de communication à double connectivité (DC) de liaison latérale provenant d'un premier noeud (UE1), où le message indique que le premier noeud (UE1) souhaite transmettre des données sur une première liaison latérale et une deuxième liaison latérale à un deuxième noeud (UE2) ; et
la transmission (806) d'un signal sans fil au premier noeud (UE1) pour commander l'établissement par le premier noeud (UE1) de la communication DC de liaison latérale, ledit procédé étant **caractérisé en ce que**
deux types de ressources de liaison latérale sont utilisés pour transmettre des données sur la première et la deuxième liaison latérale, respectivement ; et **en ce que**
les deux types de ressources de liaison latérale ont des structures de trame de liaison latérale différentes, des tableaux de bits de ressources de liaison latérale différents ou sont programmés par deux stations de base dans le cadre de technologies d'accès radio (RAT) identiques ou différentes.

11. Procédé selon la revendication 10, comprenant en outre la transmission d'informations de liaison latérale au premier noeud (UE1) et/ou au deuxième noeud (UE2), lesdites informations de liaison latérale comprenant des informations relatives à au moins un des éléments suivants : capacité à assister la communication de liaison latérale DC, fréquences de liaison latérale disponibles, type de ressource de liaison latérale, informations sur le pool de ressources de liaison latérale et informations sur la synchronisation de liaison latérale.

12. Procédé selon la revendication 10, où : le message d'intérêt de communication de liaison latérale DC comprend : une préconfiguration d'un type de ressource de liaison latérale et/ou une demande de ressource de liaison latérale à une deuxième station de base (eNB2, gNB).

13. Procédé selon la revendication 12, comprenant en outre
la transmission d'une deuxième demande d'ajout de liaison latérale à la deuxième station de base (eNB2, gNB) ;
la réception d'un deuxième message d'accusé de réception d'ajout de liaison latérale en provenance de la deuxième station de base (eNB2, gNB) ;
la génération d'informations de configuration de porteuse de liaison latérale DC relatives à la première liaison latérale et/ou à la deuxième liaison latérale sur la base du deuxième message d'accusé de réception d'ajout de liaison latérale ; et
la transmission des informations de configuration de la porteuse de liaison latérale DC au premier noeud (UE1).

14. Noeud de communication (UE1, eNB1) configuré pour mettre en oeuvre le procédé selon l'une des revendications 1 à 13.

15. Support d'enregistrement non transitoire lisible par ordinateur sur lequel sont stockées des instructions exécutables par ordinateur pour la mise en oeuvre du procédé selon l'une des revendications 1 à 13.
